Europäisches Patentamt

European Patent Office

Office européen des brevets

(19)

(11) **EP 1 364 481 B1**

(12) **EUROPÄISCHE PATENTSCHRIFT**

(45) Veröffentlichungstag und Bekanntmachung des Hinweises auf die Patenterteilung:
**27.09.2006 Patentblatt 2006/39**

(51) Int Cl.:
***H04L 1/00*** $^{(2006.01)}$

(21) Anmeldenummer: **02708206.4**

(86) Internationale Anmeldenummer:
**PCT/DE2002/000405**

(22) Anmeldetag: **04.02.2002**

(87) Internationale Veröffentlichungsnummer:
**WO 2002/069545 (06.09.2002 Gazette 2002/36)**

(54) **VERFAHREN UND VORRICHTUNG ZUR FEHLERKORREKTUR VON DATENBLÖCKEN IN ABHÄNGIGKEIT VON FEHLERPRÜF- UND SOFTBIT-INFORMATIONEN**

METHOD AND DEVICE FOR ERROR CORRECTION OF DATA BLOCKS DEPENDING ON ERROR CHECK AND SOFTBIT INFORMATION

PROCEDE ET DISPOSITIF POUR LA CORRECTION D'ERREURS DE BLOCS DE DONNEES EN FONCTION D'INFORMATIONS DE CONTROLE D'ERREURS ET DE SOFT BITS

(84) Benannte Vertragsstaaten:
**DE FR GB IT**

(30) Priorität: **28.02.2001 DE 10109536**
**17.05.2001 DE 10124180**

(43) Veröffentlichungstag der Anmeldung:
**26.11.2003 Patentblatt 2003/48**

(73) Patentinhaber: **Infineon Technologies AG**
**81669 München (DE)**

(72) Erfinder:
- **WEBER, Michael**
  **85356 Freising (DE)**
- **YANG, Bin**
  **70550 Stuttgart (DE)**
- **KRÜGER, Martin**
  **80995 München (DE)**
- **WU, Xiaofeng**
  **85579 Neubiberg (DE)**

(74) Vertreter: **Lange, Thomas**
**Patentanwälte**
**Lambsdorff & Lange**
**Dingolfinger Strasse 6**
**81673 München (DE)**

(56) Entgegenhaltungen:
**EP-A- 0 567 799          US-A- 4 521 886**

- **TERVO R: "Soft-decision algorithm and readable erasure correction for a BFSK demodulator" COMMUNICATIONS, COMPUTERS AND SIGNAL PROCESSING, 1993., IEEE PACIFIC RIM CONFERENCE ON VICTORIA, BC, CANADA 19-21 MAY 1993, NEW YORK, NY, USA,IEEE, 19. Mai 1993 (1993-05-19), Seiten 419-422, XP010141768 ISBN: 0-7803-0971-5**
- **PATENT ABSTRACTS OF JAPAN vol. 012, no. 042 (P-663), 6. Februar 1988 (1988-02-06) & JP 62 188075 A (HITACHI LTD;OTHERS: 01), 17. August 1987 (1987-08-17)**
- **CHENG-CHI CHENG ET AL: "Effect of coder/ decoder reliability on bit error rate performance of wireless communication systems" PERFORMANCE, COMPUTING, AND COMMUNICATIONS CONFERENCE, 1997. IPCCC 1997., IEEE INTERNATIONAL PHOENIX, TEMPE, AZ, USA 5-7 FEB. 1997, NEW YORK, NY, USA, IEEE, US, 5. Februar 1997 (1997-02-05), Seiten 117-124, XP010216980 ISBN: 0-7803-3873-1**

EP 1 364 481 B1

**Beschreibung**

Die Erfindung betrifft ein Verfahren und eine Vorrichtung zur Fehlerkorrektur eines über einen Kanal übertragenen Datensignals bestehend aus Datenblöcken mit zugeordneter Fehlerprüfinformation.

Eine generelle Zielsetzung bei der Übertragung von Daten über einen Kanal, insbesondere einen Mobilfunkkanal, besteht darin, eine möglichst hohe Datenrate bei Auftreten von möglichst wenigen Übertragungsfehlern zu realisieren. Übertragungsfehler können sowohl durch die in dem Sender und in dem Empfänger eingesetzten Elektroniken als auch durch Verzerrungen bei der Übertragung des Signals über den Funkkanal hervorgerufen werden.

Die Datenbits durchlaufen im Sender einen an die Art der Daten angepassten sogenannten logischen Kanal, welcher üblicherweise durch eine Kanalkodierung (wird häufig auch als Fehlerschutzkodierung bezeichnet), eine Verschachtelung, eine Strukturierung der kodierten und verschachtelten Daten in Rahmen, sowie durch das eingesetzte Modulationsverfahren bestimmt wird. Die Übertragung der Daten über die Funkstrecke wird dagegen durch den sogenannten physikalischen Kanal beschrieben, welcher im Falle des Mobilfunkkanals zeitvariant ist und der Mehrwege-Ausbreitung unterliegt.

Es sind verschiedene Maßnahmen bekannt, um einen logischen Kanal für eine möglichst fehlerarme Übertragung auszulegen. Eine besonders wirksame Maßnahme zur Fehlerreduktion besteht darin, das auszusendende Signal einer Faltungskodierung zu unterziehen. Die empfängerseitige Dekodierung faltungskodierter Datensignale erfolgt mit einem Viterbi-Dekoder, welcher die vom Entzerrer zur Verfügung gestellten kodierten Bits dekodiert. Nachteilig bei der Faltungskodierung ist, dass in den ausgesendeten Datenstrom relativ viel Redundanz eingefügt wird. Eine weitere Maßnahme zur Fehlersicherung, die bei einer blockweisen Datenübertragung eingesetzt wird, besteht darin, den Nachrichtenbits eine Fehlerprüfinformation beizufügen, mit welcher der Empfänger die Richtigkeit der detektierten Daten überprüfen kann. Diese Maßnahme ist in der Regel weniger wirksam als die Faltungskodierung, hat jedoch gegenüber dieser den Vorteil, dass zumeist weniger Redundanz als bei der Faltungskodierung benötigt wird.

Es ist auch bereits bekannt, diese beiden Maßnahmen (Faltungskodierung und Hinzufügen einer Fehlerprüfinformation) zu kombinieren.

Ferner ist es bereits bekannt, die Fehlerprüfinformation so auszulegen, dass mit ihr nicht nur die Richtigkeit der empfangenen Datenbits kontrolliert werden kann, sondern dass mit ihr auch ein Bitfehler korrigiert werden kann. In diesem Fall ergibt eine geeignete empfängerseitige Berechnung auf der Basis der Fehlerprüfinformation eindeutig, welches der übertragenen Datenbits falsch ist. Dieser Bitfehler wird dann durch Invertierung des als falsch identifizierten Bits behoben. Die Behebung aller Einzelbitfehler bedeutet in vielen Fällen eine merkliche Verbesserung der Empfindlichkeit. Außerdem wird eine hohe Datenrate ermöglicht, da fehlerhaft übertragene Datenblöcke erkannt und "repariert" werden können, so dass eine nochmalige Übertragung dieser Datenblöcke vermieden werden kann.

US-A-4 521 886 offenbart die Detektion und -lokalisierung von Mehfachfehlern in einem Datenblock mittels Paritätsbits und einem Syndromgenerator. Parallel zu den Datenbits werden zugehörige Zuverlässigkeits- (i.e. Soft-) Bits gespeichert. Bei der Entscheidung, ob ein als fehlerhaft erkanntes Bit zu korrigieren ist, wird der für dieses Bit ermittelte Zuverlässigkeitswert herangezogen.

EP-A-0 567 799 betrachtet ebenfalls eine syndromgesteuerte Fehlerdetektion und Fehlerlokalisierung, bei der die Fehlerkorrektur abhängig von der Übereinstimmung des Datensyndroms mit einem von mehreren für jedes Zuverlässigkeitsbit berechneten Syndromen durchgeführt wird. Außerdem wird bei einer zu hohen Anzahl mutmaßlicher Bitfehler im Datenblock eine Fehlerkorrektur unterdrückt.

In Tervo: 'Soft-decision algorithm and readable erasure correction for a BFSK demodulator' Communications, Computers and Signal Processing, IEEE, 19.5.1993, Seiten 419-422, XP010141768 ISBN: 0-7803-0971-5 wird das Vorliegen eines Einzelbitfehlers anhand eines Paritätsbits, d.h. von Fehlerprüfinformation erkannt. Die Fehlerstelle im Datenblock wird bei demjenigen Bit angenommen, für das eine geringe Zuverlässigkeits (d.h. Softbit-)information berechnet wurde.

Eine Mehrfachfehlerdetektion ohne Berechnung eines zugehörigen Zuverlässigkeitswerts ist aus Patent Abstracts of Japan vol. 012, no. 042 (P-663), 6.2.1988 bekannt.

Wie im Rahmen der vorliegenden Erfindung erkannt wurde, kann bei der Einzelbit-Fehlerkorrektur jedoch ein Problem darin bestehen, dass durch sie die Wahrscheinlichkeit für das Auftreten von nicht erkannten Fehlern (d.h. von Datenblöcken, die die Fehlerprüfung bestehen, obgleich sie Bitfehler in Nachrichtenbits aufweisen) signifikant erhöht wird.

Der Erfindung liegt die Aufgabe zugrunde, ein Verfahren zur Einzelbit-Fehlerkorrektur eines über einen Kanal übertragenen Signals anhand Fehlerprüfinformation anzugeben, welches die Wahrscheinlichkeit für das Auftreten von unerkannten Fehlern gering hält. Ferner zielt die Erfindung darauf ab, eine Vorrichtung zur Einzelbit-Fehlerkorrektur mit dieser Eigenschaft zu schaffen.

Die Aufgabenstellung wird durch die Merkmale der Ansprüche 1 und 4 gelöst.

Zunächst wird qualitativ erläutert, warum sich die Wahrscheinlichkeit für das Auftreten unerkannter Fehler eines Nachrichtenbits durch die Vornahme einer Einzelbit-Fehlerkorrektur erhöht. Eine quantitative Abschätzung für ein bestimmtes Kodierverfahren (CS-4) folgt später.

Das Auftreten unerkannter Bitfehler im Nachrichtenteil eines Datenblockes kann zwei Ursachen haben: Mit einer sehr geringen Wahrscheinlichkeit $P_u$ kann es vorkommen, dass ein übertragener Datenblock ein oder mehrere Bitfehler von Nachrichtenbits aufweist, aber dennoch bei der empfängerseitigen Fehlerprüfung anhand der dem Datenblock zugeordneten Fehlerprüfinformation als fehlerfrei identifiziert wird. Ein weiterer Beitrag zur Wahrscheinlichkeit für das Auftreten von unerkannten Fehlern von Nachrichtenbits wird durch die Einzelbit-Fehlerkorrektur selbst bewirkt. Ursache hierfür ist, dass der für den Nachweis eines Einzelbitfehlers verwendete Algorithmus niemals ideal perfekt ist, d.h. dass eine gewisse Wahrscheinlichkeit für eine falsche Einzelbit-Fehlerkorrektur vorhanden ist. Da der Block mit dem falsch korrigierten Einzelbitfehler als "reparierter" und somit fehlerfreier Block betrachtet wird, verursacht eine falsche Einzelbit-Fehlerkorrektur einen unerkannten Fehler.

Wird mit $P_{wc}$ (wc: wrong correction) die Wahrscheinlichkeit für die Vornahme einer falschen Einzelbit-Fehlerkorrektur eines Nachrichtenbits bezeichnet, sofern bei einer Erkennung eines Einzelbitfehlers stets eine Korrektur desselben durchgeführt wird, ergibt sich als Gesamtwahrscheinlichkeit $P'_u$ für das Auftreten eines unerkannten Fehlers der Wert $P'_u = P_u + P_{wc}$.

Im Rahmen der Erfindung wurde nun erkannt, dass der durch die Vornahme einer falschen Einzelbit-Fehlerkorrektur bewirkte Beitrag $P_{wc}$ wesentlich größer als der durch das empfangsseitige "Übersehen" eines Einzelbitfehlers bewirkte Beitrag $P_u$ sein kann. Mit anderen Worten kann bei Vornahme der als solchen im Stand der Technik bekannten Einzelbit-Fehlerkorrektur die Wahrscheinlichkeit für das Auftreten von unerkannten Fehlern im Nachrichtenteil des Datenblockes drastisch zunehmen.

Nach dem erfindungsgemäßen Verfahren wird eine Softbit-Information zu den Bits eines Datenblocks berechnet. Üblicherweise geschieht dies im Rahmen der Entzerrung des Datensignals, gegebenenfalls auch bei einer Kanaldekodierung. In einem nächsten Schritt wird die Fehlerprüfinformation zu dem Datenblock ausgewertet. Falls sich bei der Auswertung der Fehlerprüfinformation ergibt, dass ein Einzelbitfehler eines Nachrichtenbits vorliegt, wird die Korrektur dieses Einzelbitfehlers nur dann durchgeführt, wenn eine Bedingung erfüllt ist, welche abhängig von der dem betrachteten Datenblock zugeordneten Softbit-Information ist.

Mit anderen Worten wird bei Feststellung eines Einzelbitfehlers eines Nachrichtenbits an Hand der Softbit-Information zu den Bits dieses Datenblocks entschieden, ob eine Einzelbit-Fehlerkorrektur durchgeführt werden soll oder nicht. Das heisst, im Unterschied zu konventionellen Verfahren, bei denen bei Feststellung eines Einzelbitfehlers stets eine Bitfehlerkorrektur durchgeführt wird, wird erfindungsgemäß die Durchführung der Einzelbit-Fehlerkorrektur davon abhängig gemacht, ob eine bestimmte Bedingung (welche abhängig von dem betrachteten Datenblock zugeordneter Softbit-Information ist) erfüllt ist oder nicht.

Einerseits wird gemäß der Erfindung die Korrektur des Einzelbitfehlers nur dann durchgeführt, wenn eine erste anhand Softbit-Information ermittelte Größe, welche eine Bewertung erlaubt, ob mehr als ein Nachrichtenbit des Datenblockes falsch ist, eine erste Schwellenwertbedingung erfüllt. Die zu untersuchende Bedingung besteht hier also darin, dass die Qualität des empfangenen Datenblocks daraufhin überprüft wird, wie viele Nachrichtenbits eine hohe Fehlerwahrscheinlichkeit aufweisen. Damit wird berücksichtigt, dass eine Einzelbit-Fehlerkorrektur bei einem Datenblock mit vergleichsweise hoher Wahrscheinlichkeit für das Auftreten von mehreren Bitfehlern nicht sinnvoll ist, da bei diesem Vorgehen die vergleichsweise hohe Gefahr besteht, einen Datenblock mit einem unerkannten Fehler zu produzieren.

Darüber hinaus kennzeichnet sich das erfindungsgemäßen Verfahren dadurch, dass das Durchführen der Korrektur des Einzelbit-Fehlers nur dann vorgenommen wird, wenn eine zweite anhand Softbit-Information ermittelte Größe, welche eine Bewertung erlaubt, ob das zu korrigierende Nachrichtenbit falsch ist, eine zweite Schwellenwertbedingung erfüllt. Bei dieser Maßnahme wird somit die Qualität des Nachrichtenbits, welches bei der Einzelbit-Fehlerkorrektur invertiert werden soll, überprüft. Nur sofern dessen Fehlerwahrscheinlichkeit ausreichend groß ist, wird die Einzelbit-Fehlerkorrektur auch tatsächlich durchgeführt. Auf diese Weise wird ebenfalls die Wahrscheinlichkeit für das Erzeugen eines unerkannten Fehlers im Rahmen der Einzelbit-Fehlerkorrektur verkleinert.

Durch die Kombination bei einer besonders bevorzugten Ausführungsvariante beiden vorstehend erläuterten Maßnahmen kann die Wahrscheinlichkeit für das Auftreten von unerkannten Fehlern um mehrere Größenordnungen verringert werden.

Mit besonderem Vorteil wird das erfindungsgemäße Verfahren zur Fehlerkorrektur von Datenblöcken in GPRS-(General Packet Radio Service)-Mobilfunksystemen eingesetzt. In GPRS-Mobilfunksystemen werden Datenpakete über gemeinsame Paketkanäle übertragen, wobei unter anderem ein besonderer Vorteil darin besteht, dass anders als beim GSM-(Global System for Mobile Telecommunications)-System dauerhaft Verbindungen aufrecht erhalten werden können.

Bei GPRS wird die maximale Datenrate mit der Kodiervorschrift CS-4 (Coding Scheme-4) erreicht. Da bei CS-4 bei 428 der insgesamt 431 Nachrichtenbits eines Datenblocks auf den Einsatz einer Faltungskodierung verzichtet wird, treten bei CS-4 hohe Bitfehlerraten auf. Das erfindunggemäße Verfahren ermöglicht bei CS-4 die Vornahme einer Einzelbit-Fehlerkorrektur, während herkömmliche Einzelbit-Fehlerkorrekturverfahren bei CS-4 nicht einsetzbar sind, da sie aufgrund ihres hohen Beitrags $P_{wc}$ unzulässig hohe Wahrscheinlichkeiten für das Auftreten von unerkannten Bitfehlern hervorrufen.

Die Erfindung wird nachfolgend an Hand eines Ausführungsbeispiels unter Bezugnahme auf die Zeichnung beschrieben; in dieser zeigt:

Fig. 1     eine schematische Darstellung der Signalverarbeitung in einem Mobilfunksender und einem Mobilfunkempfänger in Form eines Blockschaltbilds;

Fig. 2     eine schematische Darstellung der Struktur eines ausgesendeten Datenblocks mit Fehlerprüfinformation; und

Fig. 3     ein Diagramm zur Veranschaulichung möglicher Fehlermuster von Datenblöcken gruppiert nach empfängerseitig an Hand der Fehlerinformation berechneter Fehlerausprägungen.

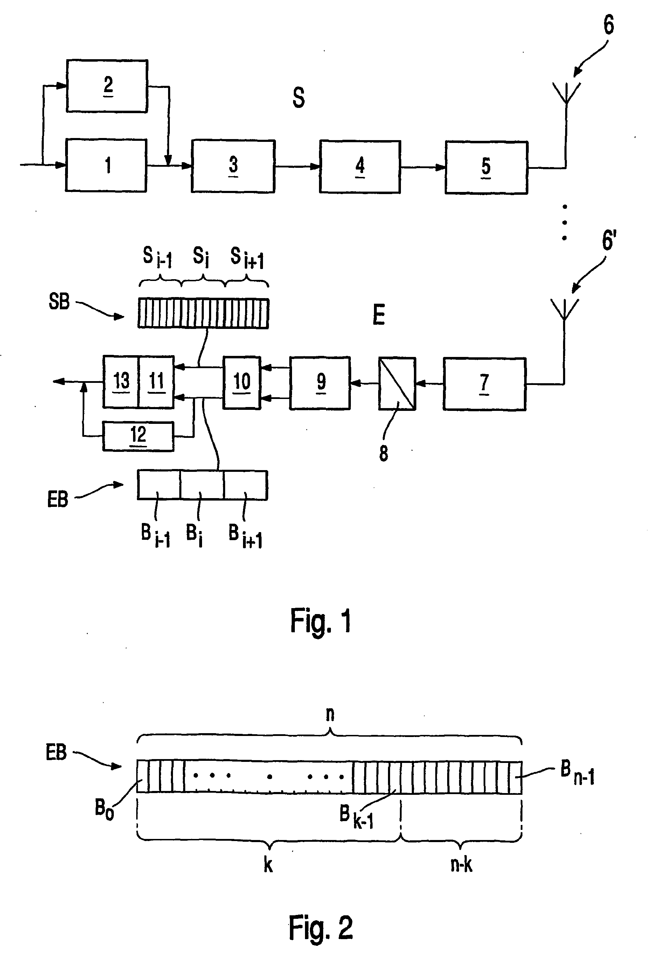

Fig. 1 zeigt die Struktur eines Mobilfunksystems besteht aus einem Mobilfunk-Sender S und einem Mobilfunk-Empfänger E.

Der Mobilfunk-Sender S umfasst eine Berechnungseinheit 1 für Fehlerprüfinformation, einen optionalen Kanalkodierer 2, einen Verschachteler 3, einen Burstbildner 4, einen Modulator 5 sowie eine Sendeantenne 6.

Der Berechnungseinheit 1 für Fehlerprüfinformation wird ein digitales, in der Regel quellenkodiertes Eingangssignal zugeführt. Die Bits des Eingangssignals werden als Nachrichtenbits bezeichnet. Die Berechnungseinheit 1 für Fehlerprüfinformation berechnet aus der Abfolge von Nachrichtenbits Fehlerprüfinformation. Genauer wird zu einer Sequenz von Nachrichtenbits, welche aus einer vorgegebenen Anzahl von Bits besteht, jeweils eine Fehlerprüfinformation berechnet, welche ebenfalls eine vorgegebene Sequenz von Bits, im Folgenden als Fehlerprüfbits oder Paritätsbits bezeichnet, darstellt. Die berechnete Sequenz der Fehlerprüfbits wird an die Sequenz der Nachrichtenbits angehängt. Die aus den beiden Sequenzen konstruierte Datenstruktur bildet einen Datenblock.

In dem dargestellten Beispiel ist der Berechnungseinheit 1 für Fehlerprüfinformation ein Kanalkodierer 2 parallel geschaltet. Der Kanalkodierer 2 führt eine Faltungskodierung entweder bezüglich sämtlicher oder lediglich bestimmter, besonders schutzwürdiger Nachrichtenbits durch. Beispielsweise werden bei dem Kodierverfahren CS-4 nur drei der 431 Nachrichtenbits einer Nachrichtenbitsequenz faltungskodiert, während die restlichen 428 Nachrichtenbits keiner Faltungskodierung unterzogen werden.

Die auf diese Weise zusammengestellten Datenblöcke werden dem Verschachteler 3 zugeleitet. Der Verschachteler 3 nimmt eine Verschachtelung vor. Der Zweck der Verschachtelung besteht darin, den Einfluss von in Gruppen auftretenden Fehlern (sogenannten Bündelfehlern), welche für die Mobilfunkübertragung typisch sind, zu reduzieren.

Der auf diese Weise vorbehandelte Datenstrom wird dem Burstbildner 4 zugeführt. Dieser bettet die mit Fehlerprüfinformation versehenen Datenblöcke in eine Rahmenstruktur ein, welche für das jeweilige Mobilfunksystem charakteristisch ist. Wird beispielsweise eine TDMA-(Time Division Multiple Access)-Komponente eingesetzt, so werden die Bursts einer vorgegebenen Dauer nur z.B. ein Mal pro Rahmendauer dem Modulator 5 weitergeleitet und über die Sendeantenne 6 abgestrahlt.

Bei der Modulation werden vorzugsweise Modulationsverfahren einer höheren Ordnung (bei EDGE z.B. 8PSK (PSK: Phase Shift Keying) statt GMSK (Gaussian Minimum Shift Keying)) eingesetzt.

Der Mobilfunk-Empfänger E umfasst eine Empfangsantenne 6', einen Empfangsverstärker und Empfangsfilter 7, einen Analog-Digital-Umsetzer 8, einen Entzerrer 9, einen Entschachteler 10, eine Einheit zur Auswertung von Fehlerprüfinformation 11 und eine Einheit zur Fehlerkorrektur 13. Den Einheiten 11, 13 zur Auswertung von Fehlerprüfinformation und zur Fehlerkorrektur kann optional ein Faltungsdekodierer 12 parallel geschaltet sein.

Das mittels der Sendeantenne 6 ausgestrahlte Signal wird von der Empfangsantenne 6' empfangen und dem Empfangsverstärker und Empfangsfilter 7 zugeführt. Im Signalweg dahinter erfolgt die Digitalisierung des Empfangssignals mittels des Analog-Digital-Umsetzers 8.

Das digitalisierte Signal wird dem Entzerrer 9 zugeleitet. Dieser kann in bekannter Weise als adaptiver kohärenter Entzerrer realisiert sein und zu diesem Zweck einen (nicht dargestellten) Kanalschätzer umfassen.

Der Entzerrer 9 gibt zu jedem detektierten Datensymbol eine Zuverlässigkeitsinformation in Form sogenannter Softbits aus. Die Zuverlässigkeitsinformation, die auch als Softbit-Information bezeichnet wird, gibt zu jedem ausgegebenen ("entschiedenen") Bit einen Wert an, welcher für die Wahrscheinlichkeit eines Bitfehlers repräsentativ ist. Üblicherweise wird durch die Softbits ein ganzzahliger Wert dargestellt, welcher groß ist, wenn die Wahrscheinlichkeit, dass das entsprechende Bit falsch ist, gering ist.

Mittels des Entschachtelers 10 werden die beiden Bitströme (entschiedene Bits und zugehörige Softbit-Information) wieder in die richtige Reihenfolge gebracht; d.h. die bei der Verschachtelung im Verschachteler 3 vorgenommene Permutierung der Bits rückgängig gemacht. Hinter dem Entschachteler 10 liegt somit ein Strom EB von entschiedenen Bits $B_{i-1}$, $B_i$, $B_{i+1}$ vor, welcher eine Rekonstruktion des mit der Fehlerprüfinformation versehenen Bitstroms vor dem Verschachteler 3 ist, und es liegt ein aus Softbitwörtern $S_{i-1}$, $S_i$, $S_{i+1}$ aufgebauter Bitstrom SB mit den Bits $B_{i-1}$, $B_i$, $B_{i+1}$

zugeordneter Zuverlässigkeitsinformation vor.

Der Strom der entschiedenen Bits EB sowie der Softbit-Strom SB wird der Einheit 11 zur Auswertung von Fehlerprüfinformation zugeführt. Die Einheit 11 zur Auswertung von Fehlerprüfinformation stellt an Hand der zu einem Block erhaltenen Fehlerprüfinformation fest, ob ein Block fehlerfrei übertragen wurde. Sofern eine fehlerfreie Übertragung festgestellt wird, sind keine weiteren Maßnahmen erforderlich. Wird festgestellt, dass der Block mit zwei oder mehr Fehlern übertragen wurde, ist eine Fehlerbehebung unmöglich, da die Fehlerprüfinformation bei zwei oder mehr Fehlern nicht die Identifikation der fehlerhaft übertragenen Bits gestattet. Wird bei der Auswertung der Fehlerprüfinformation jedoch festgestellt, dass der erhaltene Datenblock genau einen Bitfehler beinhaltet, ermöglicht die Fehlerprüfinformation die Identifikation dieses mutmaßlich fehlerhaften Bits.

Im Folgenden wird die Auswertung der Fehlerprüfinformation bei Verwendung eines zyklischen Kodes (n,k) erläutert. Fig. 2 zeigt den Aufbau eines Datenblocks. Mit n wird die Gesamtanzahl der Bits des Datenblocks bezeichnet, k gibt die Anzahl der Nachrichtenbits an. Der Datenblock enthält n - k Fehlerinformationsbits (Paritätsbits). Da diese, wie bereits erwähnt, senderseitig aus den k Nachrichtenbits berechnet werden, gibt es $2^k$ zulässige Datenblöcke und $2^n$ mögliche Datenblöcke unter Einbeziehung aller denkbaren Bitfehler.

Die Auswertung der Fehlerinformation (Paritätsbits) in der Einheit 11 ist im Stand der Technik bekannt und kann z.B. folgendermaßen durchgeführt werden:

Die n aneinander gehängten Bits werden als Koeffizienten eines Polynoms interpretiert, welches durch ein anderes im Empfänger E gespeichertes Polynom dividiert wird. Das durch die Polynomdivision entstehende Restpolynom gibt Auskunft darüber, ob die empfangenen Bits korrekt sind. Wenn genau ein Bit des übertragenen Blocks falsch ist, geht aus dem Restpolynom eindeutig hervor, welches Bit falsch ist. Damit ist das (mutmaßlich) falsche Bit identifiziert.

Angenommen, bei dem mutmaßlich falschen Bit handelt es sich um ein Nachrichtenbit. In diesem Fall ist davon auszugehen, dass die empfangene Nachricht fehlerhaft ist. Dieses mutmaßlich falsche Nachrichtenbit wird nun erfindungsgemäß in der Einheit 13 entweder invertiert oder nicht invertiert. Ob eine Invertierung vorgenommen wird oder nicht, entscheidet sich gemäß der Erfindung an Hand einer Überprüfung der Softbit-Information. Der Überprüfung können verschiedene Bedingungen zu Grunde gelegt werden.

Eine erste Möglichkeit besteht darin, die Invertierung des mutmaßlich fehlerhaften Nachrichtenbits nur dann durchzuführen, wenn eine Größe, welche für die Wahrscheinlichkeit repräsentativ ist, dass mehr als ein Nachrichtenbit des Datenblocks falsch ist, nicht allzu groß ist. Zu diesem Zweck kann die Anzahl der Nachrichtenbits $B_0$, ..., $B_{k-1}$, deren zugehörige Softbits $S_0$, ..., $S_{k-1}$ für eine besonders hohe Fehlerwahrscheinlichkeit sprechen, gezählt werden. Kriterium für eine besonders hohe Fehlerwahrscheinlichkeit ist dabei eine Schwelle $S_{HFW1}$. Die Anzahl der Nachrichtenbits mit einem Softbit-Wert kleiner als die Schwelle $S_{HFW1}$ wird mit $K_{HFW}$ bezeichnet.

Ferner wird eine Schwelle $K_{SB}$ definiert, welche eine ganze Zahl ist. Ein Block gilt als "guter Block", wenn $K_{HFW} < K_{SB}$ ist, d.h. wenn die Anzahl der fehlerkritischen Nachrichtenbits kleiner als die vordefinierte Schwelle $K_{SB}$ ist. Diese Bedingung wird im Folgenden als Bedingung 1 bezeichnet.

Eine andere Möglichkeit besteht darin, die Fehlerwahrscheinlichkeit desjenigen Nachrichtenbits, welches bei der Fehlerinformationsüberprüfung als mutmaßlich fehlerhaft identifiziert wurde, zu bewerten. Zu diesem Zweck wird eine zweite Schwelle $S_{HFW2}$ definiert, welche nicht identisch mit $S_{HFW1}$ sein muss. Nachfolgend wird überprüft, ob der dem mutmaßlich fehlerhaften Nachrichtenbit zugeordnete Softbit-Wert $S_i < S_{HFW2}$ ist, d.h. ob das als mutmaßlich fehlerhaft identifizierte Bit tatsächlich eine hohe Fehlerwahrscheinlichkeit gemäß der Softbit-Information aufweist. Diese Bedingung wird im Folgenden als Bedingung 2 bezeichnet.

In ähnlicher Weise können weitere oder auch andere auf der gelieferten Softbit-Information beruhende Bedingungen definiert und überprüft werden. Beispielsweise kann die für die erste Bedingung berechnete Größe auch die direkt aus der Softbit-Information berechnete Wahrscheinlichkeit für das Vorhandensein von zwei oder mehr Bitfehlern im Nachrichtenteil des Datenblocks sein.

Bei einem ersten Ausführungsbeispiel der Erfindung wird das als mutmaßlich fehlerhaft identifizierte Nachrichtenbit genau dann und nur dann korrigiert, wenn Bedingung 1 erfüllt ist. Gemäß einem zweiten Ausführungsbeispiel der Erfindung wird das als mutmaßlich fehlerhaft identifizierte Nachrichtenbit genau dann und nur dann invertiert, wenn Bedingung 2 erfüllt ist. Ein besonders bevorzugtes drittes Ausführungsbeispiel ist dadurch charakterisiert, dass das mutmaßlich fehlerhafte Nachrichtenbit genau dann und nur dann invertiert wird, wenn sowohl Bedingung 1 als auch Bedingung 2 erfüllt sind.

Es wird darauf hingewiesen, dass der in Fig. 1 dargestellte Sender-/Empfänger-Aufbau ein spezielles, der Erläuterung der Erfindung dienendes Beispiel darstellt, welches jedoch in vielfältiger Weise abwandelbar ist. Beispielsweise kann der Kanalkodierer 2 im Sendesignalpfad auch hinter der Berechnungseinheit 1 für die Fehlerprüfinformation angeordnet sein, und demzufolge kann sich der Kanaldekodierer 12 im Empfangssignalpfad vor den Einheiten 11, 13 befinden. In diesem Fall kann die Softbit-Information auch vom Kanaldekodierer 12 ausgegeben werden

An Hand einer Abschätzung für das Kodierverfahren CS-4 wird nun erläutert, warum bei diesem Kodierverfahren eine in herkömmlicher Weise zwingend durchgeführte Einzelbitfehlerkorrektur nicht möglich ist und inwieweit durch das erfindungsgemäße Verfahren eine Reduzierung von unerkannten Fehlern in Datenblöcken erreichbar ist.

Für das Kodierverfahren CS-4 gilt n = 447 und k = 431. Demzufolge enthält ein Datenblock n - k = 16 Paritätsbits.

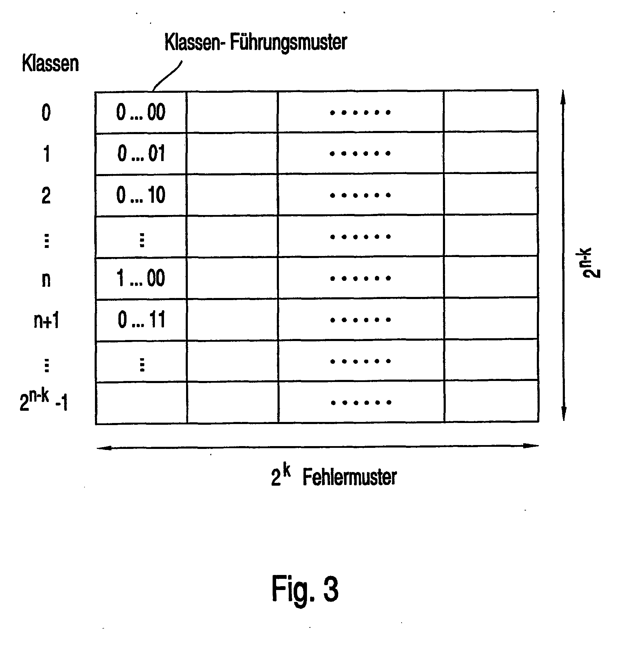

Fig. 3 zeigt eine schematische Darstellung aller möglichen $2^n$ Datenblöcke gruppiert nach unterschiedlichen empfängerseitig berechneten Fehlerbit-Informationen. Jeder berechneten Fehlerbit-Information sind $2^k$ Datenblöcke zugeordnet, die im Folgenden auch als Fehlermuster bezeichnet werden. Eine Klasse wird durch diejenigen $2^k$ Fehlermuster gebildet, welche die gleiche Fehlerbit-Information ergeben. Bei der in Fig. 3 dargestellten Tabelle sind die Klassen den Tabellenzeilen und die Fehlermuster den Tabellenspalten zugeordnet. Dabei ist in der ersten Spalte jeweils das Fehlermuster (Datenblock) mit dem geringsten Gewicht (d.h. der Anzahl der Bits mit Wert 1) eingetragen. Dieses wird in jeder Klasse als das Klassen-Führungsmuster bezeichnet. Ein zyklischer Kode ist üblicherweise so gebildet, dass die Klassen-Führungsmuster stets das geringstmögliche Gewicht haben.

Gemäß Fig. 3 können die $2^n$ Fehlermuster folgendermaßen klassifiziert werden:

1. Die Klasse 0 mit dem Klassen-Führungsmuster, welches allein aus Nullen besteht, enthält die $2^k$ zulässigen Fehlermuster, d.h. diejenigen Datenblöcke, die gemäß Fehlerprüfinformation als korrekt festgestellt werden.

2. Die n Unterklassen 1 bis n enthalten diejenigen Fehlermuster, welche genau ein fehlerhaftes Bit enthalten. Dabei wird unterschieden:

2.1: Die Unterklassen 1 bis k enthalten diejenigen Fehlermuster, bei denen der Einzelbitfehler ein Nachrichtenbit ist.

2.2: Die Unterklassen k+1 bis n enthalten diejenigen Fehlermuster, bei denen der Einzelbitfehler ein Paritätsbit ist.

3. Die restlichen $2^{n-k}$ - (n+1) Unterklassen enthalten diejenigen Fehlermuster mit mehr als zwei Bitfehlern. Deren Klassen-Führungsmuster weist ein Gewicht > 2 auf.

Wie bereits erläutert, betrachtet die vorliegende Erfindung die Korrektur von Einzelbitfehlern im Fall 2.1.

Es wird ein binärer symmetrischer Kanal (BSC: Binary Symmetric Channel) mit einer Bitinvertierungs-Fehlerwahrscheinlichkeit p betrachtet. Die Wahrscheinlichkeit $P_w$ für ein bestimmtes Fehlermuster des Gewichts w beträgt dann

$$P_W = p^w (1 - p)^{n-w} \qquad (w = 0, 1, 2, \ldots) \qquad (1)$$

Die Anzahl der Fehlermuster des Gewichts w, welche die k Nachrichtenbits betreffen, beträgt

$$N_w = \binom{k}{w} = \frac{k(k - 1) \cdot \ldots \cdot (k - w + 1)}{w!} \qquad (2)$$

Unter der Annahme, dass sämtliche dieser Fehlermuster mit gleicher Wahrscheinlichkeit über die $2^{n-k}$ Klassen verteilt sind, ergibt sich die mittlere Anzahl von Fehlermustern des Gewichts w in jeder Klasse zu:

$$n_w = \begin{cases} \dfrac{N_2 - 2^{n-k} + (n + 1)}{2^{n-k}} & \text{für } w = 2 \\[2ex] \dfrac{N_w}{2^{n-k}} & \text{für } w > 2 \end{cases} \qquad (3)$$

Nun können die verschiedenen Wahrscheinlichkeiten für das Auftreten unerkannter Fehler wie folgt berechnet werden:

Im Fall 1 (d.h. für die Klasse 0) beträgt die Wahrscheinlichkeit, dass ein empfangener Datenblock, der als korrekt betrachtet wird, nicht erkannte Nachrichtenbitfehler aufweist

$$P_u = \sum_{w \geq 2} n_w P_w \qquad (4)$$

Im Fall 2 (d.h. für die Klassen 1 bis k) beträgt die Wahrscheinlichkeit, dass genau ein einziges Nachrichtenbit fehlerhaft ist, für eine Klasse

$$P_a = P_1 \qquad (5)$$

Die Wahrscheinlichkeit, in diesem Fall mehr als einen Nachrichtenbitfehler zu haben, beträgt dann

$$P_b = \sum_{w \geq 2} n_w P_w = P_u \qquad (6)$$

Sofern bei Nachweis eines Nachrichtenbitfehlers stets eine Fehlerkorrektur durchgeführt wird, beträgt die Wahrscheinlichkeit, dass eine falsche Fehlerkorrektur durchgeführt wird

$$P_{wc} = \frac{P_b}{P_a + P_b} \qquad (7)$$

Ein unerkannter Fehler eines Nachrichtenbits tritt auf, wenn entweder ein falsches Nachrichtenbit nicht erkannt wird oder wenn eine unrichtige Fehlerkorrektur durchgeführt wird. Somit ergibt sich als Wahrscheinlichkeit für das Auftreten eines unerkannten Nachrichtenbitfehlers insgesamt

$$P'_u = P_u + P_{wc} \qquad (8)$$

Für CS-4 werden für $p = 10^{-3}$ bzw. $p = 10^{-2}$ die folgenden Werte erhalten :

$$p = 10^{-3} \; : \; P_u \approx 4 \cdot 10^{-7}, \; P'_u \approx P_{wc} = 6,47 \cdot 10^{-4} \qquad (9)$$

$$p = 10^{-2} \; : \; P_u \approx 10^{-5}, \; P'_u \approx P_{wc} = 0.088 \qquad (10)$$

Mit anderen Worten zeigt sich, dass bei $p = 10^{-3}$ eine von 1546 Fehlerkorrekturen und bei $p = 10^{-2}$ eine von 11 Fehlerkorrekturen falsch ist (wie bereits erwähnt betrifft dieses Ergebnis den Fall, dass bei Erkennung eines Einzelbitfehlers stets eine Korrektur desselben vorgenommen wird). Damit ist $P'_u$ drei bis vier Größenordnungen größer als $P_u$. Der Einfluss fehlerhafter Korrekturen auf das Auftreten von unerkannten Fehlern ist also wesentlich größer als der Einfluss von Fehlern, die a-priori vorhanden und als solche nicht erkannt werden. Die Erhöhung der Wahrscheinlichkeit für das Auftreten von unerkannten Fehlern um etwa drei Größenordnungen ist die Ursache dafür, dass bei CS-4 eine gemäß dem Stand der Technik zwingend durchgeführte Korrektur von Einzelbit-Fehlern nicht akzeptabel ist.
Im Rahmen der Erfindung wurden Simulationen für CS-4 mit den Werten $S_{HFW1} = S_{HFW2} = 4$ und $K_{SB} = 16$ unter Verwendung eines Verfahrens gemäß dem dritten Ausführungsbeispiel der Erfindung durchgeführt. In allen Simulationen mit bis zu $10^5$ Blöcken traten dabei keine unerkannten Fehler auf. Daraus folgt, dass die Wahrscheinlichkeit für das Auftreten von unerkannten Fehlern bei diesem Verfahren mehrere Größenordnungen kleiner ist als bei einer zwingenden Einzelbit-Fehlerkorrektur ohne Softbit-Prüfung.

**Patentansprüche**

1. Verfahren zur Fehlerkorrektur eines über einen Kanal übertragenen Datensignals bestehend aus Datenblöcken mit zugeordneter Fehlerprüfinformation, mit den Schritten:

   - Berechnen von Softbit-Information zu den Nachrichtenbits eines Datenblocks;
   - Auswerten der Fehlerprüfinformation bezüglich des Datenblocks zur Feststellung, ob ein Einzelbitfehler vorliegt und, sofern ein Einzelbitfehler vorliegt, wo dieser lokalisiert ist; **gekennzeichnet durch**:
   - sofern sich bei der Auswertung der Fehlerprüfinformation ergibt, dass ein Einzelbitfehler eines Nachrichtenbits vorliegt, Durchführen der Korrektur des lokalisierten Einzelbitfehlers,

      -- sofern eine erste anhand Softbit-Information ermittelte Größe, welche eine Bewertung erlaubt, ob mehr als ein Nachrichtenbit des Datenblockes falsch ist, eine erste Schwellenwertbedingung erfüllt, und
      -- sofern eine zweite anhand Softbit-Information ermittelte Größe, welche eine Bewertung erlaubt, ob das zu korrigierende Nachrichtenbit falsch ist, eine zweite Schwellenwertbedingung erfüllt.

2. Verfahren nach Anspruch 1,
   **dadurch gekennzeichnet,**

      - **dass** das Verfahren zur Fehlerkorrektur von Datenblöcken in GPRS-Mobilfunksystemen eingesetzt wird.

3. Verfahren nach einem der Ansprüche 1 oder 2,
   **dadurch gekennzeichnet,**

      - **dass** das verfahren zur Fehlerkorrektur von Datenblöcken eingesetzt wird, welche nach der Kodiervorschrift CS-4 fehlerschutzkodiert wurden.

4. Vorrichtung zur Fehlerkorrektur eines über einen Kanal übertragenen Datensignals bestehend aus Datenblöcken mit zugeordneter Fehlerprüfinformation, mit

      - einem Mittel (9) zum Berechnen von Softbit-Information zu den Bits eines Datenblocks,
      - einem Mittel (11) zum Auswerten der Fehlerprüfinformation bezüglich des Datenblocks zur Feststellung, ob ein Einzelbitfehler vorliegt und, sofern ein Einzelbitfehler vorliegt, wo dieser lokalisiert ist; **gekennzeichnet durch**:
      - Mittel (13) zur Fehlerkorrektur, welches ausgelegt ist, eine Korrektur des lokalisierten Einzelbitfehlers durchzuführen, sofern

      -- eine erste anhand Softbit-Information ermittelte Größe, welche eine Bewertung erlaubt, ob mehr als ein Nachrichtenbit des Datenblockes falsch ist, eine erste Schwellenwertbedingung erfüllt, und
      -- eine zweite anhand Softbit-Information ermittelte Größe, welche eine Bewertung erlaubt, ob das zu korrigierende Nachrichtenbit falsch ist, eine zweite Schwellenwertbedingung erfüllt.

5. Vorrichtung nach Anspruch 4,
   **dadurch gekennzeichnet,**

      - **dass** die Vorrichtung zur Fehlerkorrektur von Datenblöcken in GPRS-Mobilfunksystemen ausgelegt ist.

6. Vorrichtung nach einem der Ansprüche 4 oder 5,
   **dadurch gekennzeichnet,**

      - **dass** die Vorrichtung zur Fehlerkorrektur von Datenblöcken ausgelegt ist, welche nach der Kodiervorschrift CS-4 fehlerschutzkodiert wurden.

## EP 1 364 481 B1

**Claims**

1. Method for error correction of a data signal which is transmitted via a channel, comprising data blocks with associated error checking information, having the following steps:

   - calculation of softbit information relating to the message bits in a data block;
   - evaluation of the error checking information with respect to the data block in order to determine whether a single bit error is present and, if a single bit error is present, where it is located; **characterized by**:
   - if it is found during the evaluation of the error checking information that a single bit error in a message bit is present, the located single bit error is corrected,

      -- provided a first variable, which is determined on the basis of softbit information and allows an assessment as to whether more than one message bit in the data block is incorrect, satisfies a first threshold value condition, and
      -- provided a second variable, which is determined on the basis of softbit information and allows an assessment as to whether the message bit to be corrected is incorrect, satisfies a second threshold value condition.

2. Method according to Claim 1, **characterized**

      - **in that** the method for error correction of data blocks is used in GPRS mobile radio systems.

3. Method according to one of Claims 1 or 2, **characterized**

      - **in that** the method for error correction of data blocks which have been error-protection-coded in accordance with coding scheme CS-4 is used.

4. Device for error correction of a data signal which is transmitted via a channel, comprising data blocks with associated error checking information, having

      - a means (9) for calculation of softbit information relating to the bits in a data block,
      - a means (11) for evaluation of the error checking information with respect to the data block in order to determine whether a single bit error is present and, if a single bit error is present, where it is located;

   **characterized by**:

      - means (13) for error correction which is designed to correct the located single bit error provided that

         -- a first variable, which is determined on the basis of softbit information and allows an assessment as to whether more than one message bit in the data block is incorrect, satisfies a first threshold value condition, and
         -- a second variable, which is determined on the basis of softbit information and allows an assessment as to whether the message bit to be corrected is incorrect, satisfies a second threshold value condition.

5. Device according to Claim 4, **characterized**

      - **in that** the device is designed for error correction of data blocks in GPRS mobile radio systems.

6. Device according to one of Claims 4 or 5, **characterized**

      - **in that** the device is designed for error correction of data blocks which have been error-protection-coded in accordance with coding scheme CS-4.

**Revendications**

1. Procédé de correction d'erreurs d'un signal de données, qui est transmis par un canal et qui est constitué de blocs de données ayant une information associée de contrôle d'erreurs, comprenant les stades dans lesquels :

   - on calcule une information de softbit pour les bits de message d'un bloc de données,
   - on exploite l'information de contrôle d'erreurs concernant le bloc de données pour constater s'il y a une erreur de bit individuel et, dans la mesure où il y a une erreur de bit individuel, où elle est localisée ; **caractérisé par** :

   -- dans la mesure où il apparaît lors de l'exploitation de l'information de contrôle d'erreur qu'il y a une erreur de bit individuel d'un bit de message, on effectue la correction de l'erreur de bit individuel localisé,
   -- dans la mesure où une première grandeur déterminée au moyen de l'information de softbit et permettant d'évaluer si plus d'un bit de message du bloc de données est faux satisfait une première condition de valeur de seuil et
   -- dans la mesure où une deuxième grandeur déterminée au moyen de l'information de softbit et permettant d'évaluer si le bit de message à corriger est faux satisfait une deuxième condition de valeur de seuil.

2. Procédé suivant la revendication 1,
   **caractérisé**

   - **en ce que** le procédé est utilisé pour la correction d'erreurs de blocs de données dans des systèmes de téléphonie mobile GPRS.

3. Procédé suivant l'une des revendications 1 à 2,
   **caractérisé**

   - **en ce que** l'on utilise le procédé de correction d'erreurs de blocs de données, qui ont été codés en étant protégées d'une erreur par la prescription de codage CS-4.

4. Dispositif de correction d'erreurs d'un signal de données transmis par un canal et constitué de blocs de données ayant une information de contrôle d'erreurs associée comprenant

   - un moyen (9) de calcul d'une information de softbit pour les bits d'un bloc de données,
   - un moyen (11) d'exploitation de l'information de contrôle d'erreurs concernant le bloc de données pour constater s'il y a une erreur de bit individuel et, dans la mesure où il y a une erreur de bit individuel, où elle est localisée, **caractérisé par**
   - des moyens (13) de correction d'erreurs qui sont conçus pour effectuer une correction de l'erreur de bit individuel localisée dans la mesure

   -- où une première grandeur déterminée au moyen d'une information de softbit et permettant d'évaluer si plus d'un bit message du bloc de données est faux satisfait une première condition de valeur de seuil et
   -- une deuxième grandeur déterminée au moyen de l'information de softbit et permettant d'évaluer si le bit de message à corriger est faux satisfait une deuxième condition de valeur de seuil.

5. Dispositif suivant la revendication 4, **caractérisé**

   - **en ce que** le dispositif est conçu pour la correction d'erreurs de blocs de données dans des systèmes de téléphonie mobile GPRS.

6. Dispositif suivant l'une des revendications 4 ou 5,
   **caractérisé**
   **en ce que** le dispositif est conçu pour la correction d'erreurs de blocs de données, qui ont été codés avec protection d'erreur par la prescription de codage CS-4.

Fig. 1

Fig. 2

**Klassen**

Klassen- Führungsmuster

| | Klassen-Führungsmuster | | | |
|---|---|---|---|---|
| 0 | $0 \ldots 00$ | | $\bullet \bullet \bullet \bullet \bullet \bullet$ | |
| 1 | $0 \ldots 01$ | | $\bullet \bullet \bullet \bullet \bullet \bullet$ | |
| 2 | $0 \ldots 10$ | | $\bullet \bullet \bullet \bullet \bullet \bullet$ | |
| $\vdots$ | $\vdots$ | | $\bullet \bullet \bullet \bullet \bullet \bullet$ | |
| n | $1 \ldots 00$ | | $\bullet \bullet \bullet \bullet \bullet \bullet$ | |
| n+1 | $0 \ldots 11$ | | $\bullet \bullet \bullet \bullet \bullet \bullet$ | |
| $\vdots$ | $\vdots$ | | $\bullet \bullet \bullet \bullet \bullet \bullet$ | |
| $2^{n-k} -1$ | | | $\bullet \bullet \bullet \bullet \bullet \bullet$ | |

$2^{n-k}$

$2^{k}$ Fehlermuster

# Fig. 3